# EUROPÄISCHE PATENTSCHRIFT

(11) **EP 3 320 024 B1**
(45) Veröffentlichungstag und Bekanntmachung des Hinweises auf die Patenterteilung: **11.09.2019**
(21) Anmeldenummer: 16736139.3
(22) Anmeldetag: 06.07.2016
(51) Int. Cl.: C08G 69/48, C08G 69/16, C08G 69/26, C08G 69/46

(54) **HERSTELLUNG EINES POLYAMIDS, DAS 2,5-BIS(AMINOMETHYL)FURAN ENTHÄLT**
PREPARATION OF A POLYAMIDE CONTAINING 2,5-BIS(AMINOMETHYL)FURANE
FABRICATION D'UN POLYAMIDE CONTENANT 2,5-BIS(AMINOMETHYLE)FURANE

(30) Priorität: 09.07.2015 EP 15176125
(43) Veröffentlichungstag der Anmeldung: 16.05.2018
(73) Patentinhaber: BASF SE, 67056 Ludwigshafen (DE)
(72) Erfinder: HABRAKEN, Gijsbrecht Jacobus Maria, 67061 Ludwigshafen (DE); SPRAFKE, Johannes Klaus, 67346 Speyer (DE); DA SILVA, Marion, 67061 Ludwigshafen (DE)
(74) Vertreter: BASF IP Association
(86) Internationale Anmeldenummer: PCT/EP2016/066029
(87) Internationale Veröffentlichungsnummer: WO 2017/005812

(56) Entgegenhaltungen:
- US-A1- 2014 135 449
- MITIAKOUDIS ANASTASSIOS ET AL: "Synthesis and characterization of furanic polyamides", MACROMOLECULES, AMERICAN CHEMICAL SOCIETY, US, Bd. 24, Nr. 4, 1. Februar 1991 (1991-02-01), Seiten 830-835, XP009157490, ISSN: 0024-9297
- MITIAKOUDIS ANASTASSIOS ET AL: "Polyamides containing furanic moieties", POLYMER COMMUNICATIONS,, Bd. 26, Nr. 8, 1. Januar 1985 (1985-01-01) , Seiten 246-249, XP009157496, ISSN: 0263-6476

## Beschreibung

Die vorliegende Erfindung betrifft ein Verfahren zur Herstellung eines Polyamids (P) durch Polymerisation aus einer Reaktionsmischung (RM), wobei die Reaktionsmischung (RM) mindestens ein Lactam, mindestens ein Diamin (I), mindestens ein Dicarbonsäurederivat und Wasser enthält.

Polyamide sind im Allgemeinen teilkristalline Polymere, die industriell von besonderer Bedeutung sind, da sie sich durch sehr gute mechanische Eigenschaften auszeichnen. Insbesondere besitzen sie eine hohe Festigkeit, Steifigkeit und Zähigkeit, eine gute Chemikalienbeständigkeit sowie eine hohe Abriebfestigkeit und Kriechstromfestigkeit. Diese Eigenschaften sind insbesondere von Bedeutung für die Herstellung von Spritzgussteilen. Eine hohe Zähigkeit ist besonders wichtig für die Verwendung von Polyamiden als Verpackungsfolien. Aufgrund ihrer mechanischen Eigenschaften werden Polyamide industriell zur Herstellung von Textilien wie Angelschnüren, Kletterseilen und Teppichböden verwendet. Außerdem finden Polyamide Verwendung zur Herstellung von Dübeln, Schrauben und Kabelbindern. Darüber hinaus werden Polyamide als Lacke, Klebstoffe und Beschichtungsmaterialien eingesetzt.

Um mechanisch und chemisch besonders stabile Polyamide herzustellen, werden Polyamide beispielsweise vernetzt. Nachteilig dabei ist allerdings, dass vernetzte Polyamide nicht mehr oder nur noch sehr schlecht verarbeitet werden können. Daher sind im Stand der Technik verschiedene Verfahren beschrieben, um Polymere, insbesondere Polyamide, bereitzustellen, die reversibel vernetzt werden können, um die Verarbeitbarkeit zu gewährleisten. Derartige Polymere werden auch als funktionale Polymere bezeichnet.

Beispielsweise können in die Seitenketten von Polymeren Diene und Dienophile eingebaut werden, die über Diels-Alder-Reaktionen benachbarte Ketten miteinander verbinden und so vernetzen können.

Ein im Stand der Technik in den Seitengruppen von Polymeren verwendetes Dienophil ist beispielsweise Maleinimid. Ein im Stand der Technik in den Seitengruppen von Polymeren verwendetes Dien ist beispielsweise Furan.

Nachteilig bei der Verwendung von Dienen und Dienophilen in den Seitenketten eines Polymers ist einerseits, dass durch die Seitenketten die mechanischen Eigenschaften des Polymers verändert werden. Darüberhinaus wird durch die Seitenketten die Glasübergangstemperatur, T_{G}, des Polymers erhöht und das Kristallisationsverhalten verändert. Ein weiteres Problem bei der Verwendung von Dienen und Dienophilen ist darin zu sehen, dass die Diene mit den Dienophilen unter Umständen ungewollt Reaktionen miteinander eingehen, beispielsweise bei Scherung, wodurch sich die Eigenschaften des Polymers verändern können.

Es besteht daher Bedarf an Verfahren, die es ermöglichen, funktionale Polymere, insbesondere funktionale Polyamide, herzustellen, die die zuvor beschriebenen Nachteile nicht oder in vermindertem Maße aufweisen. Eine Möglichkeit hierzu besteht darin, Dienbaueinheiten, wie beispielsweise Furan, in die Hauptkette eines Polymers einzuarbeiten. Das Dienophil kann dann bei Bedarf zu dem Polymer mit den Dienbaueinheiten in der Hauptkette gegeben werden und so gezielt die Eigenschaften verändert werden.

Die US 2014/0135449 beschreibt ein Verfahren zur Herstellung von Polyamiden, die Furaneinheiten in der Hauptkette enthalten, ausgehend von Dicarbonsäuren und 2,5-Bis(aminomethyl)furan. Gemäß US 2014/0135449 erfolgt die Herstellung der Polyamide mehrstufig, indem zunächst die Dicarbonsäure und das Diamin bei einer niedrigen Temperatur (40 bis 80 °C) in Wasser oder Methanol miteinander in Kontakt gebracht werden zur Bildung eines Salzes aus der Dicarbonsäure und dem Diamin. Anschließend wird das Salz bei einer Temperatur knapp oberhalb des Schmelzpunktes des Salzes in einem Stickstoffstrom behandelt, um das Polyamid zu bilden. Der Schmelzpunkt des gebildeten Polyamids liegt deutlich oberhalb der Temperatur, bei der das Salz behandelt wird.

Mit dem in der US 2014/0135449 beschriebenen Verfahren lassen sich bereits Polyamide herstellen, die Furan in der Hauptkette enthalten. Trotzdem besteht Bedarf an weiteren Verfahren zur Herstellung von Polyamiden, die Furan enthalten, die weniger zeitaufwändig sind als das in der US 2014/0135449 beschriebene Verfahren.

Die der vorliegenden Erfindung zugrunde liegende Aufgabe ist somit die Bereitstellung eines weiteren Verfahrens zur Herstellung von Polyamiden, die Furan in der Hauptkette enthalten. Das Verfahren soll möglichst einfach und kostengünstig durchführbar sein und die zuvor beschriebenen Nachteile nicht oder in vermindertem Maße aufweisen.

Gelöst wird diese Aufgabe durch ein Verfahren zur Herstellung eines Polyamids (P) mit einer Schmelztemperatur T_{M} durch Polymerisation aus einer Reaktionsmischung (RM) bei einer Reaktionstemperatur T_{R}, dadurch gekennzeichnet, dass die Reaktionsmischung (RM) die folgenden Komponenten enthält:
(A) mindestens ein Lactam
(B) mindestens ein Diamin der allgemeinen Formel (I) 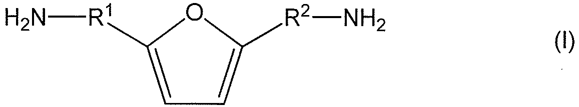 in der
   R¹, R² unabhängig voneinander ausgewählt sind aus C₁-C₁₀-Alkandiyl,
(C) mindestens ein Dicarbonsäurederivat ausgewählt aus der Gruppe bestehend aus einer Dicarbonsäure der allgemeinen Formel (II), einem Dicarbonsäureester der allgemeinen Formel (III) und einem Dinitril der allgemeinen Formel (IV)

   HOOC-R³⁻COOH (II)

   R⁵OOC-R⁴-COOR⁶ (III)

   NC-R⁷-CN (IV)

   in denen
   - R³, R⁴, R⁷: unabhängig voneinander ausgewählt sind aus der Gruppe bestehend aus einer Bindung, unsubstituiertem oder zumindest monosubstituiertem C₁-C₄₀-Alkandiyl und unsubstituiertem oder zumindest monosubstituiertem C₆-C₄₀-Arylen, wobei die Substituenten ausgewählt sind aus der Gruppe bestehend aus F, Cl, Br, I, OR⁸, C₁C₁₀-Alkyl und C₆-C₁₀-Aryl, wobei
   - R⁸: ausgewählt ist aus der Gruppe bestehend aus H und C₁-C₁₀-Alkyl;
   - R⁵, R⁶: unabhängig voneinander ausgewählt sind aus der Gruppe bestehend aus unsubstituiertem oder zumindest monosubstituiertem C₁-C₂₀-Alkyl, unsubstituiertem oder zumindest monosubstituiertem C₆-C₂₀-Aryl und unsubstituiertem oder zumindest monosubstituiertem C₆-C₂₀-Aralkyl, wobei die Substituenten ausgewählt sind aus der Gruppe bestehend aus F, Cl, Br, I, OR⁹ und C₁-C₁₀-Alkyl, wobei
   R⁹ ausgewählt ist aus der Gruppe bestehend aus H und C₁-C₁₀-Alkyl; und
(D) Wasser.

Das erfindungsgemäße Verfahren zeichnet sich durch seine einfache Durchführbarkeit aus. Überraschenderweise besitzen die durch das erfindungsgemäße Verfahren hergestellten Polyamide (P) eine hohe gewichtsmittlere Molmasse (M_{W}) und eine hohe zahlenmittlere Molmasse (Mₙ). Zudem weisen die erfindungsgemäß hergestellten Polyamide (P) eine besonders niedrige Polydispersität (M_{W}/Mₙ) auf. Die erfindungsgemäß hergestellten Polyamide (P) besitzen außerdem eine helle Eigenfarbe.

Die mit dem erfindungsgemäßen Verfahren hergestellten Polyamide (P) können außerdem über die in der Hauptkette enthaltenen Furangruppen weiter funktionalisiert werden. Außerdem ermöglichen die Furangruppen eine gezielte Quervernetzung der erfindungsgemäßen Polyamide (P). Auch als selbstheilende Polymere können die erfindungsgemäß hergestellten Polyamide (P) verwendet werden.

Nachfolgend wird das erfindungsgemäße Verfahren näher erläutert.

### Reaktionsmischung (RM)

Erfindungsgemäß enthält die Reaktionsmischung (RM) als Komponente (A) mindestens ein Lactam, als Komponente (B) mindestens ein Diamin (I), als Komponente (C) mindestens ein Dicarbonsäurederivat, ausgewählt aus der Gruppe bestehend aus einer Dicarbonsäure (II), einem Dicarbonsäureester (III) und einem Dinitril (IV), als Komponente (D) Wasser und optional als Komponente (E) von 0 bis 1 Gew.-% mindestens eines Endgruppenreglers, bezogen auf das Gesamtgewicht der Komponenten (A) bis (E).

Unter "mindestens ein Lactam" wird im Rahmen der vorliegenden Erfindung sowohl genau ein Lactam als auch eine Mischung aus zwei oder mehr Lactamen verstanden.

Unter "mindestens ein Diamin (I)" wird im Rahmen der vorliegenden Erfindung sowohl genau ein Diamin (I) als auch eine Mischung aus zwei oder mehr Diaminen (I) verstanden. Gleiches gilt für die Bezeichnung "mindestens ein Dicarbonsäurederivat". Unter "mindestens ein Dicarbonsäurederivat" wird erfindungsgemäß sowohl genau ein Dicarbonsäurederivat verstanden als auch eine Mischung aus zwei oder mehr Dicarbonsäurederivaten.

Unter "mindestens ein Endgruppenregler" wird im Rahmen der vorliegenden Erfindung sowohl genau ein Endgruppenregler als auch eine Mischung aus zwei oder mehr Endgruppenreglern verstanden.

In einer Ausführungsform der vorliegenden Erfindung enthält die Reaktionsmischung (RM) als Komponente (A) im Bereich von 26 bis 98 Gew.-% mindestens eines Lactams, als Komponente (B) im Bereich von 0,5 bis 35 Gew.-% mindestens eines Diamins (I), als Komponente (C) im Bereich von 0,5 bis 30 Gew.-% mindestens eines Dicarbonsäurederivats, als Komponente (D) im Bereich von 1 bis 30 Gew.-% Wasser und als Komponente (E) im Bereich von 0 bis 1 Gew.-% mindestens eines Endgruppenreglers, wobei die Gewichtsprozent jeweils bezogen sind auf das Gesamtgewicht der Komponenten (A) bis (D) bzw. bezogen auf das Gesamtgewicht der Komponenten (A) bis (E), für den Fall, dass die Reaktionsmischung (RM) die Komponente (E) enthält.

Erfindungsgemäß beziehen sich die Gew.-%-Angaben der Komponenten (A), (B), (C), (D) sowie optional die Komponente (E) auf das Gesamtgewicht der in der Reaktionsmischung (RM) enthaltenen Komponenten (A), (B), (C), (D) sowie optional der Komponente (E).

Für den Fall, dass die Komponente (E) in der Reaktionsmischung (RM) nicht enthalten ist, beziehen sich die Gew.-%-Angaben der Komponenten (A), (B), (C) und (D) auf das Gesamtgewicht der in der Reaktionsmischung (RM) enthaltenen Komponenten (A), (B), (C) und (D).

Für den Fall, dass die Komponente (E) in der Reaktionsmischung (RM) enthalten ist, beziehen sich die Gew.-%-Angaben der Komponenten (A), (B), (C), (D) und (E) auf das Gesamtgewicht der in der Reaktionsmischung enthaltenen Komponenten (A), (B), (C), (D) und (E).

In einer bevorzugten Ausführungsform beziehen sich die Gew.-%-Angaben der Komponenten (A), (B), (C), (D) sowie optional der Komponente (E) auf das Gesamtgewicht der Reaktionsmischung (RM).

In einer Ausführungsform der vorliegenden Erfindung enthält die Reaktionsmischung (RM) somit
26 bis 98 Gew.-% der Komponente (A),
0,5 bis 35 Gew.-% der Komponente (B),
0,5 bis 30 Gew.-% der Komponente (C) und
1 bis 30 Gew.-% der Komponente (D),
wobei die Gewichtsprozent jeweils bezogen sind auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

In einer weiteren, bevorzugten Ausführungsform enthält die Reaktionsmischung (RM) als Komponente (A) im Bereich von 50 bis 89 Gew.-% mindestens eines Lactams, als Komponente (B) im Bereich von 5 bis 25 Gew.-% mindestens eines Diamins (I), als Komponente (C) im Bereich von 5 bis 25 Gew.-% mindestens eines Dicarbonsäurederivats, als Komponente (D) im Bereich von 1 bis 20 Gew.-% Wasser, und als Komponente (E) im Bereich von 0,1 bis 0,9 Gew.-% mindestens eines Endgruppenreglers wobei die Gewichtsprozent jeweils bezogen sind auf das Gesamtgewicht der Komponenten (A) bis (E), bevorzugt bezogen auf das Gesamtgewicht der Reaktionsmischung (RM).

In einer bevorzugten Ausführungsform der vorliegenden Erfindung enthält die Reaktionsmischung (RM) somit
50 bis 89 Gew.-% der Komponente (A),
5 bis 25 Gew:-% der Komponente (B),
5 bis 25 Gew.-% der Komponente (C),
1 bis 20 Gew.-% der Komponente (D) und
0,1 bis 0,9 Gew.-% der Komponente (E),
wobei die Gewichtsprozent jeweils bezogen sind auf das Gesamtgewicht der Komponenten (A) bis (E), bevorzugt bezogen auf das Gesamtgewicht der Reaktionsmischung (RM).

In einer weiteren, besonders bevorzugten Ausführungsform enthält die Reaktionsmischung (RM) als Komponente (A) im Bereich von 75 bis 82 Gew.-% mindestens eines Lactams, als Komponente (B) im Bereich von 8 bis 12 Gew.-% mindestens eines Diamins (I), als Komponente (C) im Bereich von 11 bis 13 Gew.-% mindestens eines Dicarbonsäurederivats, als Komponente (D) im Bereich von 1 bis 5 Gew.-% Wasser, und als Komponente (E) im Bereich von 0,1 bis 0,75 Gew.-% mindestens eines Endgruppenreglers, wobei die Gewichtsprozent jeweils bezogen sind auf das Gesamtgewicht der Komponenten (A) bis (E), bevorzugt bezogen auf das Gesamtgewicht der Reaktionsmischung (RM).

In einer besonders bevorzugten Ausführungsform der vorliegenden Erfindung enthält die Reaktionsmischung (RM) somit
75 bis 82 Gew.-% der Komponente (A),
8 bis 12 Gew.-% der Komponente (B),
11 bis 13 Gew.-% der Komponente (C),
1 bis 5 Gew.-% der Komponente (D) und
0,1 bis 0,75 Gew.-% der Komponente (E),
wobei die Gewichtsprozent jeweils bezogen sind auf das Gesamtgewicht der Komponenten (A) bis (E), bevorzugt bezogen auf das Gesamtgewicht der Reaktionsmischung (RM).

Gegenstand der vorliegenden Erfindung ist somit auch ein Verfahren, bei dem die Reaktionsmischung (RM)
26 bis 98 Gew.-% der Komponente (A),
0,5 bis 35 Gew.-% der Komponente (B),
0,5 bis 30 Gew.-% der Komponente (C),
1 bis 30 Gew.-% der Komponente (D) und
0 bis 1 Gew.-% der Komponente (E)
enthält, bezogen auf das Gesamtgewicht der Komponenten (A) bis (E), bevorzugt bezogen auf das Gesamtgewicht der Reaktionsmischung (RM).

Die Summe der Gewichtsprozente der Komponenten (A) bis (E) addiert sich im Allgemeinen zu 100 Gew.-%.

Sämtliche Gewichtsprozentangaben der Komponenten (A) bis (E) beziehen sich, soweit nicht anders angegeben, auf die Zusammensetzung der Reaktionsmischung (RM) zu Beginn der Polymerisation. Unter der "Zusammensetzung der Reaktionsmischung (RM) zu Beginn der Polymerisation" wird im Rahmen der vorliegenden Erfindung die Zusammensetzung der Reaktionsmischung (RM) verstanden bevor die in der Reaktionsmischung (RM) enthalten Komponenten (A) bis (E) miteinander zu reagieren beginnen, bevor also die Polymerisation einsetzt. Die in der Reaktionsmischung (RM) enthalten Komponenten (A) bis (E) liegen dann also noch in ihrer unreagierten Form vor. Es versteht sich von selbst, dass die in der Reaktionsmischung (RM) enthaltenen Komponenten (A) bis (E) während der Polymerisation zumindest teilweise miteinander reagieren und sich daher das Verhältnis der Komponenten (A) bis (E) untereinander ändert, ebenso wie sich die in der Reaktionsmischung (RM) enthaltenen Komponenten (A) bis (E) während der Polymerisation ändern. Dem Fachmann sind diese Reaktionen bekannt.

Im Folgenden werden die einzelnen Komponenten der Reaktionsmischung (RM) näher erläutert.

### Komponente (A): Lactam

In einer Ausführungsform enthält die Reaktionsmischung (RM) als Komponente (A) im Bereich von 26 bis 98 Gew.-% mindestens eines Lactams, bevorzugt im Bereich von 50 bis 89 Gew.-% und insbesondere bevorzugt im Bereich von 75 bis 82 Gew.-%, jeweils bezogen auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

In einer Ausführungsform der vorliegenden Erfindung enthält die Reaktionsmischung (RM) somit im Bereich von 26 bis 98 Gew.-% der Komponente (A), bevorzugt im Bereich von 50 bis 89 Gew.-% der Komponente (A) und insbesondere bevorzugt im Bereich von 75 bis 82 Gew.-% der Komponente (A), wobei die Gewichtsprozent jeweils bezogen sind auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

Gegenstand der vorliegenden Erfindung ist somit auch ein Verfahren, bei dem die Reaktionsmischung (RM) als Komponente (A) im Bereich von 26 bis 98 Gew.-% mindestens eines Lactams enthält, bezogen auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

Unter Lactam werden erfindungsgemäß zyklische Amide verstanden, die im Ring 3 bis 12 Kohlenstoffatome, bevorzugt 6 bis 12 Kohlenstoffatome aufweisen. Geeignete Lactame sind beispielsweise ausgewählt aus der Gruppe bestehend aus 3-Aminopropansäurelactam (β-Lactam; β-Propiolactam), 4-Aminobutansäurelactam (γ-Lactam; γ-Butyrotactam), 5-Aminopentansäurelactam (δ-Lactam; δ-Valerolactam), 6-Aminohexansäurelactam (ε-Lactam; ε-Caprolactam), 7-Aminoheptansäurelactam (ζ-Lactam; ζ-Heptanolactam), 8-Aminooktansäurelactam (η-Lactam; η-Oktanolactam), 9-Nonansäurelactam (θ-Lactam; θ-Nonanolactam), 10-Dekansäurelactam (ω-Dekanolactam), 11-Undekansäurelactam (ω-Undekanoiactam) und 12-Dodekansäurelactam (ω-Dodekanoiactam).

Die Lactame können unsubstituiert oder zumindest monosubstituiert sein. Für den Fall, dass zumindest monosubstituierte Lactame eingesetzt werden, können diese an den Kohlenstoffatomen des Rings einen, zwei oder mehrere Substituenten tragen, die unabhängig voneinander ausgewählt sind aus der Gruppe bestehend aus C₁- bis C₁₀-Alkyl, C₅- bis C₆-Cycloalkyl und C₅- bis C₁₀-Aryl.

Als C₁- bis C₁₀-Alkylsubstituenten sind beispielsweise Methyl, Ethyl, Propyl, Isopropyl, n-Butyl, sec.-Butyl und tert.-Butyl geeignet. Ein geeigneter C₅- bis C₆-Cycloalkylsubstituent ist beispielsweise Cyclohexyl. Bevorzugte C₅- bis C₁₀-Arylsubstituenten sind Phenyl und Anthranyl.

Bevorzugt werden unsubstituierte Lactame eingesetzt, wobei 12-Dodekansäurelactam (ω-Dodekanolactam) und ε-Lactam (ε-Caprotactam) bevorzugt sind. Besonders bevorzugt ist ε-Lactam (ε-Caprotactam).

ε-Caprolactam ist das zyklische Amid der Capronsäure. Es wird auch als 6-Aminohexansäurelactam, 6-Hexanlactam oder Caprolactam bezeichnet. Sein IUPAC-Name lautet "Acepan-2-one". Caprolactam besitzt die CAS-Nummer 105-60-2 und die allgemeine Formel C₆H₁₁NO. Verfahren zur Herstellung von Caprolactam sind dem Fachmann als solche bekannt.

### Komponente (B): Diamin (I)

In einer erfindungsgemäßen Ausführungsform enthält die Reaktionsmischung (RM) als Komponente (B) im Bereich von 0,5 bis 35 Gew.-% mindestens eines Diamins (I), bevorzugt im Bereich von 5 bis 25 Gew.-% und insbesondere bevorzugt im Bereich von 8 bis 12 Gew.-%, jeweils bezogen auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

In einer Ausführungsform der vorliegenden Erfindung enthält die Reaktionsmischung (RM) somit im Bereich von 0,5 bis 35 Gew.-% der Komponente (B), bevorzugt im Bereich von 5 bis 25 Gew.-% der Komponente (B) und insbesondere bevorzugt im Bereich von 8 bis 12 Gew.-% der Komponente (B), wobei die Gewichtsprozent jeweils bezogen sind auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

Die Komponente (B) ist erfindungsgemäß mindestens ein Diamin (I) 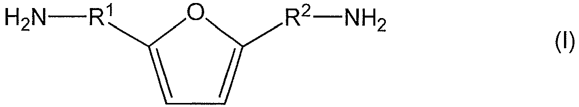 worin R¹ und R² die oben beschriebenen Bedeutungen haben.

In einer bevorzugten Ausführungsform ist Komponente (B) mindestens ein Diamin (I) worin R¹, R² unabhängig voneinander ausgewählt sind aus C₁-C₄-Alkandiyl.

In einer besonders bevorzugten Ausführungsform ist Komponente (B) mindestens ein Diamin (I) worin R¹, R² dasselbe C₁-C₄-Alkandiyl sind.

In einer insbesondere bevorzugten Ausführungsform ist Komponente (B) mindestens ein Diamin (I) worin R¹, R² beide Methylen sind.

Wenn R¹ und R² beide Methylen sind, so ist das Diamin (I) 2,5-Bis(aminomethyl)furan. 2,5-Bis(aminomethyl)furan hat die CAS-Nummer 2213-51-6.

Verfahren zur Herstellung von 2,5-Bis(aminomethyl)furan sind dem Fachmann als solche bekannt.

Unter C₁-C₁₀-Alkandiyl, wie beispielsweise oben für R¹ und R² für das Diamin (I) beschrieben, wird im Rahmen der vorliegenden Erfindung ein Kohlenwasserstoff mit 1 bis 10 Kohlenstoffatomen und zwei freien Valenzen verstanden. Es handelt sich also um ein Biradikal mit 1 bis 10 Kohlenstoffatomen. "C₁-C₁₀-Alkandiyl" umfasst sowohl lineare als auch zyklische sowie gesättigte und ungesättigte Kohlenwasserstoffe mit mit 1 bis 10 Kohlenstoffatomen und zwei freien Valenzen. Kohlenwasserstoffe mit einem zyklischen und einem linearen Anteil fallen ebenfalls unter den Begriff C₁-C₁₀-Alkandiyl. Beispiele für C₁C₁₀-Alkandiyle sind Methylen, Ethylen (Ethan-1,2-diyl, Dimethylen), Propan-1,3-diyl (Trimethylen), Propylen (Propan-1,2-diyl) und Butan-1,4-diyl (Tetramethylen). Entsprechende Ausführungen gelten für C₁-C₄-Alkandiyl.

Die Reaktionsmischung (RM) kann in einer Ausführungsform außerdem noch mindestens ein weiteres Diamin (Komponente (B')) enthalten.

Gegenstand der vorliegenden Erfindung ist somit auch ein Verfahren, bei dem die Reaktionsmischung (RM) zusätzlich die Komponente (B'), mindestens ein weiteres Diamin, enthält.

In einer erfindungsgemäßen Ausführungsform enthält die Reaktionsmischung (RM) als Komponente (B') im Bereich von 0 bis 34,5 Gew.-% mindestens eines weiteren Diamins, bevorzugt im Bereich von 1 bis 19,5 Gew.-% und insbesondere bevorzugt im Bereich von 1 bis 10 Gew.-%, jeweils bezogen auf das Gesamtgewicht der Komponenten (A), (B), (B'), (C), (D) und (E).

In einer Ausführungsform der vorliegenden Erfindung enthält die Reaktionsmischung (RM) somit im Bereich von 0,5 bis 34,5 Gew.-% der Komponente (B'), bevorzugt im Bereich von 1 bis 19,5 Gew.-% der Komponente (B') und insbesondere bevorzugt im Bereich von 1 bis 10 Gew.-% der Komponente (B'), wobei die Gewichtsprozent jeweils bezogen sind auf das Gesamtgewicht der Komponenten (A), (B), (B'), (C), (D) und (E).

Geeignete weitere Diamine (Komponente (B')) sind dem Fachmann als solche bekannt. Es versteht sich von selbst, dass das mindestens eine weitere Diamin (Komponente (B')) von der Komponente (B), dem Diamin (I), verschieden ist. Bevorzugt ist das mindestens eine weitere Diamin ausgewählt aus Alkandiaminen mit 4 bis 36 Kohlenstoffatomen, insbesondere Alkandiaminen mit 6 bis 12 Kohlenstoffatomen sowie aromatischen Diaminen. Besonders bevorzugt ist das mindestens eine weitere Diamin ausgewählt aus der Gruppe bestehend aus 1,4-Butandiamin, 1,5-Pentandiamin, 1,6-Hexamethylendiamin, 1,7-Heptamethylendiamin, 1,8-Octamethylendiamin, 1,9-Nonandiamin, 1,10-Decandiamin, 1,11-Undecandiamin, 1,12-Dodecandiamin, 1,13-Tridecandiamin, 1,14-Tetradecandiamin, 1,15-Pentadecandiamin, 1,16-Hexadecandiamin, 1,17-Heptadecandiamin, 1,18-Octadecandiamin, C36-Dimerdiamin, Bis-(4-amino-3-methylcyclohexyl)-methan (MACM), 4,4-Methylenbis(cyclohexylamin) (PACM), Bis-(4-amino-3-ethyl-cyclohexyl)-methan (EACM), Bis-(4-Amino-3,5-dimethyl-cyclohexyl)methan (TMACM), Isophorondiamin, m-Xylylendiamin, p-Xylylendiamin, 2,5-bis(methylamino)tetrahydrofuran, 2,2-Di-(4-aminophenyl)-propan, 2,2-Di-(4-aminocyclohexyl)-propan, 2,4,4-Trimethylhexamethylendiamin und 1,5-Diamino-2-methyl-pentan.

### Komponente (C): Dicarbonsäurederivat

In einer erfindungsgemäßen Ausführungsform enthält die Reaktionsmischung (RM) als Komponente (C) im Bereich von 0,5 bis 30 Gew.-% mindestens eines Dicarbonsäurederivats, bevorzugt im Bereich von 5 bis 25 Gew.-% und insbesondere bevorzugt im Bereich von 11 bis 13 Gew.-%, jeweils bezogen auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

In einer Ausführungsform der vorliegenden Erfindung enthält die Reaktionsmischung (RM) somit im Bereich von 0,5 bis 30 Gew.-% der Komponente (C), bevorzugt im Bereich von 5 bis 25 Gew.-% der Komponente (C) und insbesondere bevorzugt im Bereich von 11 bis 13 Gew.-% der Komponente (C), wobei die Gewichtsprozent jeweils bezogen sind auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

Das mindestens eine Dicarbonsäurederivat ist erfindungsgemäß ausgewählt aus der Gruppe bestehend aus einer Dicarbonsäure der allgemeinen Formel (II), einem Dicarbonsäureester der allgemeinen Formel (III) und einem Dinitril der allgemeinen Formel (IV)

HOOC-R³-COOH (II)

R⁵OOC-R⁴-COOR⁶ (III)

NC-R⁷-CN (IV)

in denen
R³, R⁴, R⁵, R⁶, R⁷ die oben genannten Bedeutungen haben.

In einer bevorzugten Ausführungsform haben die Substituenten in der Formel (II), der Formel (III) und der Formel (IV) die folgende Bedeutung:
- R³, R⁴, R⁷: sind unabhängig voneinander ausgewählt aus der Gruppe bestehend aus einer Bindung, C₁-C₃₆-Alkandiyl und C₆-C₂₀-Arylen;
- R⁵, R⁶: sind unabhängig voneinander ausgewählt aus der Gruppe bestehend aus C₁-C₁₀-Alkyl, C₆-C₁₀-Aryl und C₆-C₁₂-Aralkyl.

In einer insbesondere bevorzugten Ausführungsform haben die Substituenten in der Formel (II), der Formel (III) und der Formel (IV) die folgende Bedeutung:
- R³, R⁴, R⁷: sind unabhängig voneinander ausgewählt aus der Gruppe bestehend aus einer Bindung, C₁-C₁₂-Alkandiyl und C₆-C₁₀-Arylen;
- R⁵, R⁶: sind unabhängig voneinander ausgewählt aus der Gruppe bestehend aus C₁-C₄-Alkyl, C₁-C₁₀-Aryl und C₁-C₁₂-Aralkyl.

Unter "C₁-C₄₀-Alkandiyl", wie es beispielsweise in Formel (II) für R³ beschrieben wurde, wird im Rahmen der vorliegenden Erfindung ein Kohlenwasserstoff mit zwei freien Valenzen und von 1 bis 40 Kohlenstoffatomen verstanden. Anders ausgedrückt ist ein C₁-C₄₀-Alkandiyl ein Biradikal mit 1 bis 40 Kohlenstoffatomen. "C₁-C₄₀-Alkandiyl" umfasst sowohl lineare als auch zyklische sowie gesättigte und ungesättigte Kohlenwasserstoffe mit 1 bis 40 Kohlenstoffatomen und zwei freien Valenzen. Kohlenwasserstoffe, die sowohl eine lineare als auch eine zyklische Komponente aufweisen, fallen ebenfalls unter den Begriff. Entsprechende Ausführungen gelten für C₁-C₃₆-Alkandiyl und C₁-C₁₂-Alkandiyl.

"C₆-C₄₀-Arylen" bezeichnet einen aromatischen Kohlenwasserstoff mit zwei freien Valenzen und von 6 bis 40 Kohlenstoffatomen. Anders ausgedrückt bezeichnet "C₆-C₄₀-Arylen" ein aromatisches Biradikal mit 6 bis 40 Kohlenstoffatomen. Ein C₆-C₄₀-Arylen weist also ein aromatisches Ringsystem auf. Dieses Ringsystem kann monozyklisch, bizyklisch oder polyzyklisch sein. Entsprechende Ausführungen gelten für C₆-C₂₀-Arylen und C₆-C₁₀-Arylen.

_{"}C₁-C₂₀-Alkyl" bezeichnet gesättigte und ungesättigte Kohlenwasserstoffe mit einer freien Valenz (Radikal) und von 1 bis 20 Kohlenstoffatomen. Die Kohlenwasserstoffe können linear, verzweigt oder zyklisch sein. Ebenso ist es möglich, dass sie eine zyklische und eine lineare Komponente enthalten. Beispiele für Alkylgruppen sind Methyl, Ethyl, n-Propyl, Isopropyl, n-Butyl, Isobutyl, sec-Butyl, tert-Butyl, Hexyl und Cyclohexyl. Entsprechende Ausführungen gelten auch für C₁-C₁₀-Alkyl.

"C₆-C₂₀-Aryl" bezeichnet das Radikal eines aromatischen Kohlenwasserstoffs mit 6 bis 20 Kohlenstoffatomen. Ein Aryl weist also ein aromatisches Ringsystem auf. Dieses Ringsystem kann monozyklisch, bizyklisch oder polyzyklisch sein. Beispiele für Arylgruppen sind Phenyl und Naphthyl wie beispielsweise 1-Naphtyl und 2-Naphtyl.

"C₆-C₂₀-Aralkyl" bedeutet vorliegend, dass der Substituent ein Alkyl ist, das wiederum durch ein Aryl substituiert ist. Anders ausgedrückt beschreibt Aralkyl ein Alkandiyl, das durch ein Arylradikal substituiert ist. Ein C₆-C₂₀-Aralkyl ist ein Aralkyl, das 6 bis 20 Kohlenstoffatome enthält. Das Arylradikal kann beispielsweise ein Aryl sein wie oben definiert. Beispiele für Aralkyl sind beispielsweise Phenylmethyl (Benzyl) oder Phenylethyl.

In einer weiteren bevorzugten Ausführungsform ist das mindestens eine Dicarbonsäurederivat ausgewählt aus der Gruppe bestehend aus einer Dicarbonsäure der allgemeinen Formel (II) und einem Dicarbonsäureester der allgemeinen Formel (III).

Für die Dicarbonsäure (II) und den Dicarbonsäureester (III) gelten die zuvor beschriebenen Ausführungen und Bevorzugungen.

In einer weiteren bevorzugten Ausführungsform enthält die Komponente (C), als das mindestens eine Dicarbonsäurederivat, eine Dicarbonsäure (II). Bevorzugt enthält das mindestens eine Dicarbonsäurederivat im Bereich von 0 bis 30 Gew.-% einer Dicarbonsäure (II), besonders bevorzugt im Bereich von 0,5 bis 29,5 Gew.-% einer Dicarbonsäure (II) und insbesondere bevorzugt im Bereich von 1 bis 12 Gew.-% einer Dicarbonsäure (II), bezogen auf das Gesamtgewicht des mindestens einen Dicarbonsäurederivats. In einer am meisten bevorzugten Ausführungsform besteht das mindestens eine Dicarbonsäurederivat aus einer Dicarbonsäure (II).

Anders ausgedrückt enthält die Komponente (C) in einer weiteren bevorzugten Ausführungsform eine Dicarbonsäure (II). Bevorzugt enthält die Komponente (C) im Bereich von 0 bis 30 Gew.-% einer Dicarbonsäure (II), besonders bevorzugt im Bereich von 0,5 bis 29,5 Gew.-% einer Dicarbonsäure (II) und insbesondere bevorzugt im Bereich von 1 bis 12 Gew.-% einer Dicarbonsäure (II), bezogen auf das Gesamtgewicht der Komponente (C). In einer am meisten bevorzugten Ausführungsform besteht die Komponente (C) aus einer Dicarbonsäure (II).

Gegenstand der vorliegenden Erfindung ist somit auch ein Verfahren, bei dem die Reaktionsmischung (RM) als das mindestens eine Dicarbonsäurederivat (Komponente (C)) eine Dicarbonsäure (II) enthält.

In einer weiteren bevorzugten Ausführungsform ist die Dicarbonsäure (II) ausgewählt aus der Gruppe bestehend aus Oxalsäure (Ethandisäure), Malonsäure (Propandisäure), Bernsteinsäure (Butandisäure), Glutarsäure (Pentandisäure), Adipinsäure (Hexandisäure), Pimelinsäure (Heptandisäure), Korksäure (Octandisäure), Azelainsäure (Nonandisäure), Sebacinsäure (Decandisäure), 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, 1,3-Cyclohexandicarbonsäure, 1,4-Cyclohexandicarbonsäure, Isophthalsäure, Terephthalsäure, Naphtalendicarbonsäure, C36-Dimersäure, 2,5-Tetrahydrofurandicarbonsäure, 2,5-Furandicarbonsäure, 5-Sulfoisophtalsäure-mono-Natriumsalz und 5-Sulfoisophtalsäure-mono-Lithiumsalz.

In einer weiteren insbesondere bevorzugten Ausführungsform ist die Dicarbonsäure ausgewählt aus der Gruppe bestehend aus Adipinsäure (Hexandisäure), Pimelinsäure (Heptandisäure), Korksäure (Octandisäure), Azelainsäure (Nonandisäure), Sebacinsäure (Decandisäure), 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, 2,5-tetrahydrofurandicarbonsäure, 1,3-Cyclohexandicarbonsäure, 1,4-Cyclohexandicarbonsäure, Isophthalsäure, Terephthalsäure, Naphtalendicarbonsäure und C36-Dimersäure.

### Komponente (D): Wasser

In einer erfindungsgemäßen Ausführungsform enthält die Reaktionsmischung (RM) als Komponente (D) im Bereich von 1 bis 30 Gew.-% Wasser, bevorzugt im Bereich von 1 bis 20 Gew.-% und insbesondere bevorzugt im Bereich von 1 bis 5 Gew.-%, jeweils bezogen auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

In einer Ausführungsform der vorliegenden Erfindung enthält die Reaktionsmischung (RM) somit im Bereich von 1 bis 30 Gew.-% der Komponente (D), bevorzugt im Bereich von 1 bis 20 Gew.-% der Komponente (D) und insbesondere bevorzugt im Bereich von 1 bis 5 Gew.-% der Komponente (D), wobei die Gewichtsprozent jeweils bezogen sind auf das Gesamtgewicht der Komponenten (A) bis (D) bzw. bezogen auf das Gesamtgewicht der Komponenten (A) bis (E), bevorzugt bezogen auf das Gesamtgewicht der Reaktionsmischung (RM).

Gegenstand der vorliegenden Erfindung ist somit auch ein Verfahren, bei dem die Reaktionsmischung (RM) als Komponente (D) im Bereich von 1 bis 30 Gew.-% Wasser enthält bezogen auf das Gesamtgewicht der Komponenten (A) bis (E).

Als Komponente (D) wird vorzugsweise deionisiertes und/oder destilliertes Wasser eingesetzt.

### Komponente (E): Endgruppenregler

In einer erfindungsgemäßen Ausführungsform enthält die Reaktionsmischung (RM) als Komponente (E) im Bereich von 0 bis 1 Gew.-% Kettenregler, bevorzugt im Bereich von 0,1 bis 0,9 Gew.-% und insbesondere bevorzugt im Bereich von 0,1 bis 0,75 Gew.-%, jeweils bezogen auf das Gesamtgewicht der Komponenten (A) bis (E).

In einer Ausführungsform der vorliegenden Erfindung enthält die Reaktionsmischung (RM) somit im Bereich von 0 bis 1 Gew.-% der Komponente (E), bevorzugt im Bereich von 0,1 bis 0,9 Gew.-% der Komponente (E) und insbesondere bevorzugt im Bereich von 0,1 bis 0,75 Gew.-% der Komponente (E), wobei die Gewichtsprozent jeweils bezogen sind auf das Gesamtgewicht der Komponenten (A) bis (E).

Gegenstand der vorliegenden Erfindung ist somit auch ein Verfahren, bei dem die Reaktionsmischung (RM) als Komponente (E) 0,1 bis 0,9 Gew.-% mindestens eines Endgruppenreglers enthält, bezogen auf das Gesamtgewicht der Komponenten (A) bis (E).

Geeignete Endgruppenregler sind dem Fachmann als solche bekannt. Geeignete Endgruppenregler sind beispielsweise Monocarbonsäuren, Monoamine, Benzolmonocarbonsäuren, Naphthalinmonocarbonsäuren, Benzolmonoamine, Naphthalinmonoamine oder Disäuren oder Anhydride, die mit Aminen Imide bilden.

Bevorzugte Endgruppenregler sind beispielsweise C₁-C₁₀-Alkanmonocarbonsäuren, C₅-C₈-Cycloalkanmonocarbonsäuren, Benzolmonocarbonsäuren, Naphthalinmonocarbonsäuren, C₁-C₁₀-Alkanmonoamine, C₅-C₈-Cycloalkanmonoamine, Benzolmonoamine, Naphthalinmonoamine oder Disäuren oder Anhydride, die mit Aminen Imide bilden. Besonders bevorzugte Endgruppenregler sind beispielsweise ausgewählt aus der Gruppe bestehend aus Essigsäure, Propionsäure, Cyclopentancarbonsäure, Cyclohexancarbonsäure, Benzoesäure, Naphthalincarbonsäure, Cyclopentanamin, Cyclohexanamin, 4-Amino-2,2,6,6-Tetramethylpiperidin (TAD), Anilin, Naphthalinamin, Bernsteinsäure und Bernsteinsäureanhydrid.

### Polyamid (P)

Das erfindungsgemäß erhaltene Polyamid (P) enthält Baueinheiten, die von dem mindestens einen Lactam (Komponente (A)) abgeleitet sind, Baueinheiten, die von dem mindestens einem Diamin (I) (Komponente (B)) abgeleitet sind, und Baueinheiten, die von dem mindestens einen Dicarbonsäurederivat (Komponente (C)) abgeleitet sind.

Bevorzugt enthält das Polyamid (P) im Bereich von 26 bis 98 Gew.-% Baueinheiten, die von dem mindestens einen Lactam (Komponente (A)) abgeleitet sind, besonders bevorzugt im Bereich von 50 bis 98 Gew.-% und insbesondere bevorzugt im Bereich von 78 bis 98 Gew.-%, jeweils bezogen auf das Gesamtgewicht des Polyamids (P).

Das erfindungsgemäß hergestellte Polyamid (P) weist im Allgemeinen eine Viskositätszahl im Bereich von 60 bis 250 ml/g auf, bevorzugt von 90 bis 220 ml/g und insbesondere bevorzugt im Bereich von 100 bis 130 ml/g. Die Bestimmung der Viskositätszahl erfolgt in einer Lösung von 0,5 g Polyamid (P) in 100 ml einer 1 : 1-Mischung von Phenol und o-Dichlorbenzol.

Das gewichtsmittlere Molekulargewicht (M_{W}) liegt bei dem erfindungsgemäß hergestellten Polyamid (P) im Bereich von 20.000 bis 150.000 g/mol, bevorzugt im Bereich von 30.000 bis 140.000 g/mol und insbesondere im Bereich von 35.000 bis 120.000 g/mol, bestimmt mittels Gel-Permeations-Chromatographie (GPC) (size exclusion chromatography (SEC)). Als Lösungsmittel wurde Hexafluorisopropanol (HFIP) verwendet.

Das zahlenmittlere Molekulargewicht (Mₙ) liegt üblicherweise im Bereich von 5.000 bis 75.000 g/mol für das erfindungsgemäß hergestellte Polyamid (P), bevorzugt im Bereich von 15.000 bis 70.000 g/mol und insbesondere bevorzugt im Bereich von 17.500 bis 60.000 g/mol, bestimmt mittels Gel-Permeations-Chromatographie (GPC) (size exclusion chromatography (SEC)). Als Lösungsmittel wurde Hexafluorisopropanol (HFIP) verwendet.

Das Verhältnis des gewichtsmittleren Molekulargewichts (M_{W}) zum zahlenmittleren Molekulargewicht (Mₙ) wird als "Polydispersität" bezeichnet (PDI; M_{W}/Mₙ). Die Polydispersität des erfindungsgemäß hergestellten Polyamids (P) liegt bevorzugt im Bereich von 2,0 bis 4,0, besonders bevorzugt im Bereich von 2,0 bis 3,5 und insbesondere bevorzugt im Bereich von 2,0 bis 3,0.

Die Schmelztemperatur T_{M} des erfindungsgemäß hergestellten Polyamids (P) liegt vorzugsweise im Bereich von 80 bis 230 °C, besonders bevorzugt im Bereich von 150 bis 220 °C und am meisten bevorzugt im Bereich von 175 bis 220 °C, bestimmt durch dynamische Differenzkalorimetrie (differential scanning calorimetry; DSC) oder durch dynamisch-mechanische Thermo-Analyse (DMTA).

Gegenstand der vorliegenden Erfindung ist somit auch ein Verfahren, bei dem die Schmelztemperatur T_{M} des Polyamids (P) im Bereich von 80 bis 230 °C liegt.

Die Schmelzenthalpie ΔH des erfindungsgemäß hergestellten Polyamids (P) liegt vorzugsweise im Bereich von 0 bis 120 J/g, besonders bevorzugt im Bereich von 1 bis 80 J/g und am meisten bevorzugt im Bereich von 2 bis 70 J/g, bestimmt durch DSC.

Die Glasübergangstemperatur T_{G} des trockenen Polyamids (P) liegt im Allgemeinen im Bereich von 0 bis 85 °C, bevorzugt im Bereich von 40 bis 84 °C und insbesondere bevorzugt im Bereich von 50 bis 80 °C, bestimmt durch DSC.

### Polymerisation

Die Polymerisation aus der Reaktionsmischung (RM) kann in sämtlichen Reaktoren durchgeführt werden, die mit Druck beaufschlagt werden können. Derartige, geeignete Reaktoren sind beispielsweise Autoklaven, kontinuierliche Reaktoren oder Batch-Reaktoren.

In einer Ausführungsform erhalten die Reaktoren, in denen die Polymerisation aus der Reaktionsmischung (RM) stattfindet, eine Mischvorrichtung. In einer weiteren Ausführungsform werden die in der Reaktionsmischung (RM) enthaltenen Komponenten vor Eintritt in den Reaktor durch geeignete Mischvorrichtungen gemischt. Geeignete Mischvorrichtungen als solche sind dem Fachmann bekannt.

Die Mischvorrichtung kann sowohl statisch als auch dynamisch sein. Statische Mischvorrichtungen sind beispielsweise statische Mischer. Dynamische Mischvorrichtungen sind beispielsweise Rührer. Als Rührer sind sämtliche dem Fachmann bekannten Rührer geeignet. Bevorzugt sind als Rührer sind Anker-Rührer.

In einer besonders bevorzugten Ausführungsform der vorliegenden Erfindung wird die Reaktionsmischung (RM) also während der Polymerisation gerührt.

Gegenstand der vorliegenden Erfindung ist somit auch ein Verfahren, bei dem die Reaktionsmischung (RM) während der Polymerisation gerührt wird.

In einer Ausführungsform wird die Reaktionsmischung (RM) erhitzt, so dass sie flüssig vorliegt, um die Komponenten zu mischen. Bevorzugt wird die Reaktionsmischung (RM) in flüssigem Zustand zum Reaktor transportiert.

Die Polymerisation aus der Reaktionsmischung (RM) findet erfindungsgemäß bei einer Reaktionstemperatur T_{R} statt. Die Reaktionstemperatur T_{R} liegt bevorzugt oberhalb der Schmelztemperatur T_{M} des Polyamids (P).

Gegenstand der vorliegenden Erfindung ist somit auch ein Verfahren, bei dem die Reaktionstemperatur T_{R} oberhalb der Schmelztemperatur T_{M} des Polyamids (P) liegt.

Die Reaktionstemperatur T_{R} liegt im Allgemeinen mindestens 5 °C oberhalb der Schmelztemperatur T_{M} des Polyamids (P), bevorzugt mindestens 10 °C oberhalb der Schmelztemperatur T_{M} des Polyamids (P) und insbesondere bevorzugt mindestens 20 °C oberhalb der Schmelztemperatur T_{M} des Polyamids (P).

Bevorzugt liegt die Reaktionstemperatur T_{R} unterhalb von 250°C, besonders bevorzugt unterhalb von 235°C und insbesondere bevorzugt unterhalb von 220°C.

In einer weiteren bevorzugten Ausführungsform liegt die Reaktionstemperatur T_{R} im Bereich von 190 bis 235 °C, bevorzugt im Bereich von 195 bis 230 °C und insbesondere bevorzugt im Bereich von 200 bis 220 °C.

Gegenstand der vorliegenden Erfindung ist somit auch ein Verfahren, bei dem die Reaktionstemperatur T_{R} im Bereich von 190 bis 235 °C liegt.

In einer Ausführungsform der vorliegenden Erfindung wird die Polymerisation bei einem Druck p im Bereich von 1 bis 25 bar durchgeführt, bevorzugt im Bereich von 3 bis 22 bar und insbesondere bevorzugt im Bereich von 5 bis 20 bar.

Der Druck kann beispielsweise geregelt werden durch den Anteil der Komponente (D), Wasser, in der Reaktionsmischung (RM) und durch die Reaktionstemperatur T_{R}. Bei der verwendeten Reaktionstemperatur T_{R} geht die Komponente (D), das Wasser, zumindest teilweise in die Gasphase über und erhöht so den Druck p im Reaktor.

In einer bevorzugten Ausführungsform der vorliegenden Erfindung wird die Polymerisation aus der Reaktionsmischung (RM) in mehreren Schritte durchgeführt. In einer Ausführungsform umfasst die Polymerisation die folgenden Schritte.
a) Erhitzen der Reaktionsmischung (RM) auf die Reaktionstemperatur T_{R} und Einstellen eines ersten Drucks pₐ,
b) Absenken des ersten Druckes pₐ auf einen zweiten Druck p_{b} unterhalb des ersten Drucks pₐ, wobei die Reaktionstemperatur T_{R} aus Verfahrensschritt a) beibehalten wird.

Gegenstand der vorliegenden Erfindung ist somit auch ein Verfahren, bei dem die Polymerisation aus der Reaktionsmischung (RM) die folgenden Schritte umfasst:
a) Erhitzen der Reaktionsmischung (RM) auf eine Reaktionstemperatur T_{R} und Einstellen eines ersten Drucks pₐ,
b) Absenken des ersten Drucks pₐ auf einen zweiten Druck p_{b} unterhalb des ersten Drucks pₐ, wobei die Reaktionstemperatur T_{R} aus Verfahrensschritt a) beibehalten wird.

In Verfahrensschritt a) wird die Reaktionsmischung (RM) auf eine Reaktionstemperatur T_{R} erhitzt. Verfahren zum Erhitzen der Reaktionsmischung (RM) sind dem Fachmann als solche bekannt. Dabei verdampft zumindest ein Teil der in der Reaktionsmischung (RM) enthaltenen Komponente (D), Wasser, und erhöht so den Druck im Reaktor.

In einer Ausführungsform der vorliegenden Erfindung wird in Verfahrensschritt a) ein erster Druck pₐ im Bereich von 1 bis 25 bar eingestellt, bevorzugt im Bereich von 2 bis 20 bar und insbesondere bevorzugt im Bereich von 3 bis 10 bar.

Gegenstand der vorliegenden Erfindung ist somit auch ein Verfahren, bei dem der erste Druck pₐ in Verfahrensschritt a) im Bereich von 1 bis 25 bar liegt.

Verfahrensschritt a) sowie das bevorzugte anschließende Halten des ersten Drucks pₐ wird auch als so genannte "Druckphase" bezeichnet. Es besteht die Vorstellung, dass während dieser Druckphase der Ring des in der Reaktionsmischung (RM) enthaltenen mindestens einen Lactams (Komponente (A)) geöffnet wird unter Bildung der entsprechenden Aminocarbonsäure sowie deren Oligomeren.

In Verfahrensschritt b) wird der erste Druck pₐ auf einen zweiten Druck p_{b} abgesenkt. Der zweite Druck p_{b} liegt bevorzugt im Bereich von 0,5 bis 1,5 bar, besonders bevorzugt im Bereich von 0,7 bis 1,3 bar und insbesondere bevorzugt im Bereich von 0,9 bis 1,1 bar.

Gegenstand der vorliegenden Erfindung ist somit auch ein Verfahren, bei dem der zweite Druck p_{b} in Verfahrensschritt b) im Bereich von 0,5 bis 1,5 bar liegt.

Das Absenken des ersten Drucks pₐ auf den zweiten Druck p_{b} erfolgt im Allgemeinen durch das Abdestillieren der Komponente (D), dem Wasser. Verfahren hierzu sind dem Fachmann als solche bekannt.

Unter "beibehalten der Reaktionstemperatur T_{R} aus Verfahrensschritt a)" wird vorliegend verstanden, dass sich die Reaktionstemperatur T_{R} in Verfahrensschritt b) gegenüber der Reaktionstemperatur T_{R} in Verfahrensschritt a) um maximal +/- 5°C, bevorzugt um maximal +/- 2°C und insbesondere bevorzugt um maximal +/- 1°C ändert.

Es besteht die Vorstellung, dass während des Absenkens des ersten Druckes pₐ auf den zweiten Druck p_{b} die Komponenten (A), (B) und (C), die in der Reaktionsmischung (RM) enthalten sind, miteinander kondensieren und so polymerisieren, wobei vor allem Polyamide (P) mit niedrigem Molekulargewicht erhalten werden.

Bei dieser Kondensation bildet sich Wasser als Nebenprodukt. Dieses wird üblicherweise auch abdestilliert, um ein Absenken des ersten Drucks pₐ auf den zweiten Druck p_{b} zu erreichen.

In einer erfindungsgemäßen Ausführungsform wird im Anschluss an Verfahrensschritt b) der folgende Verfahrensschritt durchgeführt:
c) Halten des zweiten Drucks p_{b} sowie der Reaktionstemperatur T_{R} aus Verfahrensschritt b) für einen Zeitraum im Bereich von 20 min bis 20 h.

Gegenstand der vorliegenden Erfindung ist somit auch ein Verfahren, bei dem auf Schritt b) der folgende Schritt folgt:
c) Halten des zweiten Drucks p_{b} sowie der Reaktionstemperatur T_{R} aus Verfahrensschritt b) für einen Zeitraum im Bereich von 20 Minuten bis 20 Stunden.

Unter "Halten des zweiten Drucks p_{b}" wird vorliegend verstanden, dass sich der zweite Druck p_{b} in Verfahrensschritt c) gegenüber dem zweiten Druck p_{b} in Verfahrensschritt b) um maximal +/- 0,5 bar, bevorzugt um maximal +/- 0,2 bar und insbesondere bevorzugt um maximal +/- 0,05 bar ändert.

Unter "Halten der Reaktionstemperatur T_{R} aus Verfahrensschritt b)" wird vorliegend verstanden, dass sich die Reaktionstemperatur T_{R} in Verfahrensschritt c) gegenüber der Reaktionstemperatur T_{R} in Verfahrensschritt b) um maximal +/- 5°C, bevorzugt um maximal +/- 2°C und insbesondere bevorzugt um maximal +/- 1°C ändert.

In einer bevorzugten Ausführungsform werden der zweite Druck p_{b} und die Reaktionstemperatur T_{R} in Verfahrensschritt c) für einen Zeitraum im Bereich von 30 min bis 15 h gehalten, besonders bevorzugt im Bereich von 50 min bis 10 h.

Es besteht die Vorstellung, dass in Verfahrensschritt c) eine Nachkondensation des in Verfahrensschritt b) gebildeten Polyamids stattfindet, während der sich das Molekulargewicht des Polyamids (P) erhöht. Bei der Kondensation entsteht Wasser.

In einer weiteren bevorzugten Ausführungsform der vorliegenden Erfindung wird auch in Verfahrensschritt c) gebildetes Wasser kontinuierlich aus der Reaktionsmischung (RM) entfernt und so der zweite Druck p_{b} in einem Bereich von 0,001 bis 1,5 bar bevorzugt im Bereich von 0,7 bis 1,3 bar und insbesondere bevorzugt im Bereich von 0,9 bis 1,1 bar gehalten.

In einer erfindungsgemäßen Ausführungsform wird das Polyamid (P) im Anschluss an seine Herstellung in geschmolzener Form aus dem Reaktor entnommen. Das geschmolzene Polyamid (P) kann dann beispielsweise im Wasserbad abgekühlt und granuliert werden. Aus dem Granulat kann dann mit Wasser das im Polyamid (P) enthaltene Lactam extrahiert werden.

Verfahren hierzu sind dem Fachmann bekannt.

Nach der Extraktion des Lactams aus dem Granulat kann das im Granulat enthaltene Polyamid (P) weiter polymerisiert werden. Verfahren hierzu sind dem Fachmann bekannt. Vorzugsweise wird das Polyamid (P) durch eine Festphasenkondensation weiter polymerisiert, um höhere Molekulargewichte zu erzielen. Verfahren hierzu sind dem Fachmann bekannt. Beispielsweise kann das Granulat in Gegenwart von heißem Inertgas, beispielsweise von Stickstoff bei einer Temperatur unterhalb der Schmelztemperatur des Polyamids (P) behandelt werden. Die Temperatur liegt vorzugsweis im Bereich von 5 bis 40 °C unterhalb der Schmelztemperatur des Polyamids (P).

Da die Polymerisation aus der Reaktionsmischung (RM) bei einer Reaktionstemperatur T_{R} durchgeführt wird, die oberhalb der Schmelztemperatur T_{M} des Polyamids (P) liegt, wird das Polyamid (P) in geschmolzener Form erhalten. Dies ermöglicht beispielsweise ein direktes Granulieren des Polyamids (P) aus dem Reaktor. Ein Zwischenschritt, bei dem das Polyamid (P) aufgeschmolzen werden muss, um es anschließend zu granulieren, entfällt daher. Dies macht das erfindungsgemäße Verfahren besonders zeit- und kostengünstig.

### Beispiele

In den Beispielen wurden die folgenden Komponenten eingesetzt:
- (A-1): Caprolactam
- (B-1): 2,5-Bis(aminomethyl)furan
- (B'-1): Hexamethylendiamin (HMD), Reinheit: 99,9 %
- (B'-2): 4,4-Methylenbis(cyclohexylamin), Reinheit: 99 %
- (C-1): Adipinsäure, Reinheit: 99,9 %
- (C-2): Sebacinsäure, Reinheit: > 99 %
- (C-3): C36-Dimersäure, mit der CAS-Nummer 61788-89-4, hohe Reinheit: 95 - 99,0 % Dimersäure, < 2,5 % Trimersäure, < 3 % Monosäure
- (B'-C'): Salz von Hexamethylendiamin (HMD) und Adipinsäure (1 : 1)
- (D): deionisiertes Wasser
- (D'): Isopropanol

Zur Herstellung des Polyamids (P) wurden die oben beschriebenen Komponenten (A) bis (D) in den in Tabelle 1 angegebenen Mengen in einem 1,2-Liter-Büchireaktor miteinander gemischt. Die Reaktionsmischung (RM) der Beispiele 17 bis 21, 22, 23, V24, 25 und 26 wurde während der gesamten Reaktion gerührt. Beispiel 17 bis 21, 23, 25 und 26 sind erfindungsgemäße Beispiele, Beispiele V22 und V24 sind Vergleichsbeispiele.

Gemäß Verfahrensschritt a) wurden die in den Tabellen angegebene Außentemperatur T_{A} und die Reaktionstemperatur T_{R} im Reaktor eingestellt und der erste Druck pₐ innerhalb eines Zeitraums tₐ₁ eingestellt. Dieser Druck wurde für einen Zeitraum tₐ₂ gehalten. Anschließend wurde der erste Druck pₐ gemäß Verfahrensschritt b) auf den zweiten Druck p_{b} innerhalb eines Zeitraums t_{b} abgesenkt durch Abdestillieren der Komponente (D) bzw. (D') unter Beibehaltung der Reaktionstemperatur T_{R} im Reaktor. Der zweite Druck p_{b} und die Reaktionstemperatur T_{R} wurden gemäß Verfahrensschritt c) für einen Zeitraum t_{c} gehalten. Das Drehmoment M_{b} des Rührers nach Verfahrensschritt b) wurde bei einer Drehzahl von 80 rpm gemessen, ebenso wie das Drehmoment M_{c} des Rührers nach Verfahrensschritt c). Ein Teil der erhaltenen Polyamide (P) wurde als Schmelze aus dem Reaktor entfernt, in einem Wasserbad abgekühlt und granuliert. Das erhaltene Granulat wurde mit Wasser extrahiert, um Caprolactam zu entfernen. Der andere Teil der Beispiele wurde als Schmelze aus dem Reaktor entnommen ohne anschließende Granulierung oder Extraktion mit Wasser, um das Caprolactam zu entfernen.

Die Schmelztemperatur T_{M} des Polyamids (P) sowie dessen Glasübergangstemperatur T_{G} wurden mittels DSC (differential scanning calometry) bestimmt.

Mittels Gel-Permeations-Chromatographie (GPC; size exclusion chromatography (SEC)) wurden das gewichtsmittlere Molekulargewicht (M_{W}) und das zahlenmittlere Molekulargewicht (Mₙ) sowie die Polydispersität (PDI) des erhaltenen Polyamids (P) ermittelt. Als Lösungsmittel wurde Hexafluorisopropanol (HFIP) verwendet.

**Tabelle 1**

| **Komponenten** | **17** | **18** | **19** | **20** | **21** | **V22** | **23** | **V24** | **25** | **26** |
|---|---|---|---|---|---|---|---|---|---|---|
| (A-1) [g] | 262,53 | 318,76 | 160 | 160 | 318,76 | - | 93 | 320 | 384,43 | 358,61 |
| (B-1) [g] | 31,55 | 37,05 | 19,23 | 19,23 | 37,05 | 36,14 | 22,23 | - | 37,05 | 15,36 |
| (B'-1) [g] | - | - | - | - | - | - | 26,57 | - | - | - |
| (B'-2) [g] | - | - | - | - | - | - | 58,4 | - | - | - |
| (C-1) [g] | 34,08 | 42,95 | 20,77 | 20,77 | 42,95 | - | 99,78 | - | - | - |
| (C-2) [g] | - | - | - | - | - | - | - | - | 59,43 | 24,64 |
| (C-3) [g] | - | - | - | - | - | 163,9 | - | - | - | - |
| (B'-C') [g] | - | - | - | - | - | - | - | 80 | - | |
| (D) [g] | 50 | 200 | 80 | 10 | 10 | - | 60 | 60 | 12 | 6 |
| (D') [g] | - | - | - | - | - | 500 | - | - | - | - |
| (E) [g] | - | - | - | - | - | - | - | - | - | - |
| | | | | | | | | | | |

| **Verfahrensschritt a)** | **17** | **18** | **19** | **20** | **21** | **V22** | **23** | **V24** | **25** | **26** |
|---|---|---|---|---|---|---|---|---|---|---|
| T_{A} [°C] | 220 | 220 | 220 | 220 | 220 | | 220 | 220 | 220 | 220 |
| T_{R} [°C] | 210 | 210 | 210 | 210 | 210 | | 210 | 210 | 210 | 210 |
| pₐ [bar] | 12,2 | 17 | 15 | 6 | 6,6 | 1 | 8 | 12 | 6,1 | 3,4 |
| tₐ₁ [min] | 25 | 40 | 60 | 60 | 30 | 60 | 30 | 30 | 60 | 30 |
| tₐ₂ [min] | 50 | 40 | 60 | 60 | 60 | 60 | 60 | 60 | 40 | 50 |
| | | | | | | | | | | |

| **Verfahrensschritt b)** | **17** | **18** | **19** | **20** | **21** | **V22** | **23** | **V24** | **25** | **26** |
|---|---|---|---|---|---|---|---|---|---|---|
| T_{R} [°C] | 210 | 210 | 210 | 210 | 210 | 210 | 210 | 210 | 210 | 210 |
| Pb [bar] | 1 | 1 | 1 | 1 | 1 | 1 | 1 | 1 | 1 | 1 |
| t_{b} [min] | 60 | 60 | 60 | 60 | 60 | 60 | 60 | 60 | 60 | 60 |
| | | | | | | | | | | |

| **Verfahrensschritt c)** | **17** | **18** | **19** | **20** | **21** | **V22** | **23** | **V24** | **25** | **26** |
|---|---|---|---|---|---|---|---|---|---|---|
| t_{c} [min] | 300 | 60 | 120 | 120 | 60 | 240 | 100 | 90 | 60 | 130 |
| M_{b} | 14 | 14 | 14 | 16 | 21 | | 19 | 17 | 23 | 19 |
| M_{c} | 32 | 14 | 15 | 32 | 60 | | 43 | 60 | 60 | 60 |

| | | | | | | | | | | |
|---|---|---|---|---|---|---|---|---|---|---|
| **GPC** | **17** | **18** | **19** | **20** | **21** | **V22** | **23** | **V24** | **25** | **26** |
| Mₙ [g/mol] | 13400 | 4700 | 10000 | 18800 | 17600 | 5800 | 15600 | 19100 | 16500 | 19300 |
| M_{w} [g/mol] | 78300 | 15500 | 37400 | 64300 | 46400 | 14100 | 44200 | 44700 | 44100 | 49800 |
| PDI | 5,8 | 3,3 | 3,7 | 3,4 | 2,6 | 2,8 | 2,8 | 2,3 | 2,7 | 2,6 |
| Lösemittel | HFIP | HFIP | HFIP | HFIP | HFIP | THF | HFIP | HFIP | HFIP | HFIP |
| | | | | | | | | | | |

| **DSC** | **17** | **18** | **19** | **20** | **21** | **V22** | **23** | **V24** | **25** | **26** |
|---|---|---|---|---|---|---|---|---|---|---|
| T_{M}[°C] | 196,4 | | | | | 94,7 | 191,5 | 220 | 196,4 | 205,4 |
| T_{G}[°C] | 52 | | | | | 1 | 73 | 52 | 49 | 52 |

## Patentansprüche

1. Verfahren zur Herstellung eines Polyamids (P) mit einer Schmelztemperatur T_{M} durch Polymerisation aus einer Reaktionsmischung (RM) bei einer Reaktionstemperatur T_{R}, **dadurch gekennzeichnet, dass** die Reaktionsmischung (RM) die folgenden Komponenten enthält:
(A) mindestens ein Lactam
(B) mindestens ein Diamin der allgemeinen Formel (I) 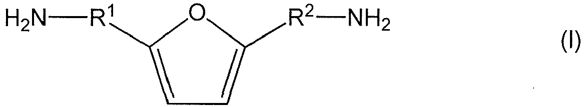 in der
R¹, R² unabhängig voneinander ausgewählt sind aus C₁-C₁₀-Alkandiyl,
(C) mindestens ein Dicarbonsäurederivat ausgewählt aus der Gruppe bestehend aus einer Dicarbonsäure der allgemeinen Formel (II), einem Dicarbonsäureester der allgemeinen Formel (III) und einem Dinitril der allgemeinen Formel (IV)
HOOC-R³⁻COOH (II)
R⁵OOC-R⁴-COOR⁶ (III)
NC-R⁷-CN (IV)
in denen
R³, R⁴, R⁷ unabhängig voneinander ausgewählt sind aus der Gruppe bestehend aus einer Bindung, unsubstituiertem oder zumindest monosubstituiertem C₁-C₄₀-Alkandiyl und unsubstituiertem oder zumindest monosubstituiertem C₆-C₄₀-Arylen, wobei
die Substituenten ausgewählt sind aus der Gruppe bestehend aus F, Cl, Br, I, OR⁸, C₁-C₁₀-Alkyl und C₆-C₁₀-Aryl, wobei
R⁸ ausgewählt ist aus der Gruppe bestehend aus H und C₁-C₁₀-Alkyl;
R⁵, R⁶ unabhängig voneinander ausgewählt sind aus der Gruppe bestehend aus unsubstituiertem oder zumindest monosubstituiertem C₁-C₂₀-Alkyl, unsubstituiertem oder zumindest monosubstituiertem C₆-C₂₀-Aryl und unsubstituiertem oder zumindest monosubstituiertem C₆-C₂₀-Aralkyl, wobei
die Substituenten ausgewählt sind aus der Gruppe bestehend aus F, Cl, Br, I, OR⁹ und C₁-C₁₀-Alkyl, wobei
R⁹ ausgewählt ist aus der Gruppe bestehend aus H und C₁-C₁₀-Alkyl; und
(D) Wasser.

2. Verfahren gemäß Anspruch 1, **dadurch gekennzeichnet, dass** die Reaktionsmischung (RM) während der Polymerisation gerührt wird.

3. Verfahren gemäß einem der Ansprüche 1 oder 2, **dadurch gekennzeichnet, dass** die Reaktionstemperatur T_{R} oberhalb der Schmelztemperatur T_{M} des Polyamids (P)liegt.

4. Verfahren gemäß einem der Ansprüche 1 bis 3, **dadurch gekennzeichnet, dass** die Reaktionsmischung (RM) als Komponente (A) im Bereich von 26 bis 98 Gew.-% mindestens eines Lactams enthält, bezogen auf das Gesamtgewicht der Komponenten (A) bis (D).

5. Verfahren gemäß einem der Ansprüche 1 bis 4, **dadurch gekennzeichnet, dass** die Reaktionstemperatur T_{R} im Bereich von 190 bis 235 °C liegt.

6. Verfahren gemäß einem der Ansprüche 1 bis 5, **dadurch gekennzeichnet, dass** die Reaktionsmischung (RM) als Komponente (D) im Bereich von 1 bis 30 Gew.-% Wasser enthält bezogen auf das Gesamtgewicht der Komponenten (A) bis (D).

7. Verfahren gemäß einem der Ansprüche 1 bis 6, **dadurch gekennzeichnet, dass** die Schmelztemperatur T_{M} des Polyamids (P) im Bereich von 80 bis 230 °C liegt.

8. Verfahren gemäß einem der Ansprüche 1 bis 7, **dadurch gekennzeichnet, dass** die Reaktionsmischung (RM)
26 bis 98 Gew.-% der Komponente (A),
0,5 bis 35 Gew.-% der Komponente (B),
0,5 bis 30 Gew.-% der Komponente (C) und
1 bis 30 Gew.-% der Komponente (D)
enthält, bezogen auf das Gesamtgewicht der Komponenten (A) bis (D).

9. Verfahren gemäß einem der Ansprüche 1 bis 8, **dadurch gekennzeichnet, dass** die Reaktionsmischung (RM) als das mindestens eine Dicarbonsäurederivat (Komponente (C)) eine Dicarbonsäure (II) enthält.

10. Verfahren gemäß einem der Ansprüche 1 bis 9, **dadurch gekennzeichnet, dass** die Polymerisation aus der Reaktionsmischung (RM) die folgenden Schritte umfasst:
a) Erhitzen der Reaktionsmischung (RM) auf eine Reaktionstemperatur T_{R} und Einstellen eines ersten Drucks pₐ,
b) Absenken des ersten Drucks pₐ auf einen zweiten Druck p_{b} unterhalb des ersten Drucks pₐ, wobei die Reaktionstemperatur T_{R} aus Verfahrensschritt a) beibehalten wird.

11. Verfahren gemäß Anspruch 10, **dadurch gekennzeichnet, dass** der erste Druck pₐ in Verfahrensschrit a) im Bereich von 1 bis 25 bar liegt.

12. Verfahren gemäß einem der Ansprüche 10 oder 11, **dadurch gekennzeichnet, dass** der zweite Druck p_{b} in Verfahrensschritt b) im Bereich von 0,5 bis 1,5 bar liegt:

13. Verfahren gemäß einem der Ansprüche 10 bis 12, **dadurch gekennzeichnet, dass** auf Schritt b) der folgende Schritt folgt:
c) Halten des zweiten Drucks p_{b} sowie der Reaktionstemperatur T_{R} aus Verfahrensschritt b) für einen Zeitraum im Bereich von 20 Minuten bis 20 Stunden.

14. Verfahren gemäß einem der Ansprüche 1 bis 13, **dadurch gekennzeichnet, dass** die Reaktionsmischung als Komponente (E) 0,1 bis 0,9 Gew.-% mindestens eines Endgruppenreglers enthält, bezogen auf das Gesamtgewicht der Komponenten (A) bis (E).

## Claims

1. A process for preparing a polyamide (P) having a melting temperature T_{M} by polymerization from a reaction mixture (RM) at a reaction temperature T_{R}, wherein the reaction mixture (RM) comprises the following components:
(A) at least one lactam
(B) at least one diamine of the general formula (I) 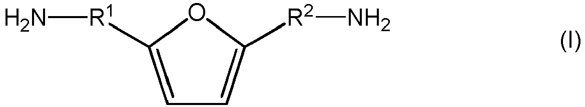 in which
R¹, R² independently of one another are selected from C₁-C₁₀ alkanediyl,
(C) at least one dicarboxylic acid derivative selected from the group consisting of a dicarboxylic acid of the general formula (II), a dicarboxylic ester of the general formula (III), and a dinitrile of the general formula (IV)
HOOC-R³-COOH (II)
R⁵OOC-R⁴-COOR⁶ (III)
NC-R⁷-CN (IV)
in which
R³, R⁴ and R⁷ independently of one another are selected from the group consisting of a bond, unsubstituted or at least monosubstituted C₁-C₄₀ alkanediyl, and unsubstituted or at least monosubstituted C₆-C₄₀ arylene, where the substituents are selected from the group consisting of F, Cl, Br, I, OR⁸, C₁-C₁₀ alkyl, and C₆-C₁₀ aryl, where R⁸ is selected from the group consisting of H and C₁-C₁₀ alkyl;
R⁵ and R⁶ independently of one another are selected from the group consisting of unsubstituted or at least monosubstituted C₁-C₂₀ alkyl, unsubstituted or at least monosubstituted C₆-C₂₀ aryl, and unsubstituted or at least monosubstituted C₆-C₂₀ aralkyl, where the substituents are selected from the group consisting of F, Cl, Br, I, OR⁹, and C₁-C₁₀ alkyl, where R⁹ is selected from the group consisting of H and C₁-C₁₀ alkyl; and
(D) water.

2. The process according to claim 1, wherein the reaction mixture (RM) is stirred during the polymerization.

3. The process according to either of claims 1 and 2, wherein the reaction temperature T_{R} is above the melting temperature T_{M} of the polyamide (P).

4. The process according to any of claims 1 to 3, wherein the reaction mixture (RM) comprises as component (A) in the range from 26 to 98 wt% of at least one lactam, based on the total weight of components (A) to (D).

5. The process according to any of claims 1 to 4, wherein the reaction temperature T_{R} is in the range from 190 to 235°C.

6. The process according to any of claims 1 to 5, wherein the reaction mixture (RM) comprises as component (D) in the range from 1 to 30 wt% of water, based on the total weight of components (A) to (D).

7. The process according to any of claims 1 to 6, wherein the melting temperature T_{M} of the polyamide (P) is in the range from 80 to 230°C.

8. The process according to any of claims 1 to 7, wherein the reaction mixture (RM) comprises
26 to 98 wt% of component (A),
0.5 to 35 wt% of component (B),
0.5 to 30 wt% of component (C), and
1 to 30 wt% of component (D),
based on the total weight of components (A) to (D).

9. The process according to any of claims 1 to 8, wherein the reaction mixture (RM) comprises a dicarboxylic acid (II) as the at least one dicarboxylic acid derivative (component (C)).

10. The process according to any of claims 1 to 9, wherein the polymerization from the reaction mixture (RM) comprises the following steps:
a) heating the reaction mixture (RM) to a reaction temperature T_{R} and establishing a first pressure pₐ,
b) lowering the first pressure pₐ to a second pressure p_{b} below the first pressure pₐ, the reaction temperature T_{R} from process step a) being retained.

11. The process according to claim 10, wherein the first pressure pₐ in process step a) is in the range from 1 to 25 bar.

12. The process according to either of claims 10 and 11, wherein the second pressure p_{b} in process step b) is in the range from 0.5 to 1.5 bar.

13. The process according to any of claims 10 to 12, wherein step b) is followed by the following step:
c) holding the second pressure p_{b} and the reaction temperature T_{R} from process step b) for a period in the range from 20 minutes to 20 hours.

14. The process according to any of claims 1 to 13, wherein the reaction mixture comprises as component (E) 0.1 to 0.9 wt% of at least one endgroup regulator, based on the total weight of components (A) to (E).

## Revendications

1. Procédé de fabrication d'un polyamide (P) ayant une température de fusion T_{M} par polymérisation à partir d'un mélange réactionnel (RM) à une température de réaction T_{R}, **caractérisé en ce que** le mélange réactionnel (RM) contient les composants suivants :
(A) au moins un lactame,
(B) au moins une diamine de la formule générale (I) : 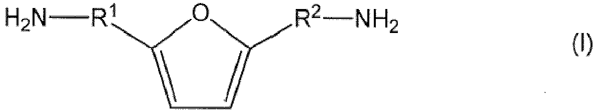 dans laquelle
R¹, R² sont choisis indépendamment l'un de l'autre parmi un alcanediyle en C₁-C₁₀,
(C) au moins un dérivé d'acide dicarboxylique choisi dans le groupe constitué par un acide dicarboxylique de la formule générale (II), un ester d'acide dicarboxylique de la formule générale (III) et un dinitrile de la formule générale (IV) :
HOOC-R³-COOH (II)
R⁵OOC-R⁴-COOR⁶ (III)
NC-R⁷-CN (IV)
dans lesquelles
R³, R⁴, R⁷ sont choisis indépendamment les uns des autres dans le groupe constitué par une liaison, un alcanediyle en C₁-C₄₀ non substitué ou au moins monosubstitué, et un arylène en C₆-C₄₀ non substitué ou au moins monosubstitué,
les substituants étant choisis dans le groupe constitué par F, Cl, Br, I, OR⁸, alkyle en C₁-C₁₀ et aryle en C₆-C₁₀,
R⁸ étant choisi dans le groupe constitué par H et un alkyle en C₁-C₁₀ ;
R⁵, R⁶ sont choisis indépendamment l'un de l'autre dans le groupe constitué par un alkyle en C₁-C₂₀ non substitué ou au moins monosubstitué, un aryle en C₆-C₂₀ non substitué ou au moins monosubstitué, et un aralkyle en C₆-C₂₀ non substitué ou au moins monosubstitué,
les substituants étant choisis dans le groupe constitué par F, Cl, Br, I, OR⁹ et alkyle en C₁-C₁₀,
R⁹ étant choisi dans le groupe constitué par H et un alkyle en C₁-C₁₀ ; et
(D) de l'eau.

2. Procédé selon la revendication 1, **caractérisé en ce que** le mélange réactionnel (RM) est agité pendant la polymérisation.

3. Procédé selon l'une quelconque des revendications 1 ou 2, **caractérisé en ce que** la température de réaction T_{R} est située au-dessus de la température de fusion T_{M} du polyamide (P).

4. Procédé selon l'une quelconque des revendications 1 à 3, **caractérisé en ce que** le mélange réactionnel (RM) contient en tant que composant (A) dans la plage allant de 26 à 98 % en poids d'au moins un lactame, par rapport au poids total des composants (A) à (D).

5. Procédé selon l'une quelconque des revendications 1 à 4, **caractérisé en ce que** la température de réaction T_{R} se situe dans la plage allant de 190 à 235 °C.

6. Procédé selon l'une quelconque des revendications 1 à 5, **caractérisé en ce que** le mélange réactionnel (RM) contient en tant que composant D dans la plage allant de 1 à 30 % en poids d'eau, par rapport au poids total des composants (A) à (D).

7. Procédé selon l'une quelconque des revendications 1 à 6, **caractérisé en ce que** la température de fusion T_{M} du polyamide (P) se situe dans la plage allant de 80 à 230 °C.

8. Procédé selon l'une quelconque des revendications 1 à 7, **caractérisé en ce que** le mélange réactionnel (RM) contient :
26 à 98 % en poids du composant (A),
0,5 à 35 % en poids du composant (B),
0,5 à 30 % en poids du composant (C) et
1 à 30 % en poids du composant (D),
par rapport au poids total des composants (A) à (D).

9. Procédé selon l'une quelconque des revendications 1 à 8, **caractérisé en ce que** le mélange réactionnel (RM) contient un acide dicarboxylique (II) en tant que ledit au moins un dérivé d'acide dicarboxylique (composant (C)).

10. Procédé selon l'une quelconque des revendications 1 à 9, **caractérisé en ce que** la polymérisation à partir du mélange réactionnel (RM) comprend les étapes suivantes :
a) le chauffage du mélange réactionnel (RM) à une température de réaction T_{R} et l'ajustement d'une première pression pₐ,
b) la réduction de la première pression pₐ à une deuxième pression p_{b} inférieure à la première pression pₐ, la température de réaction T_{R} de l'étape de procédé a) étant maintenue.

11. Procédé selon la revendication 10, **caractérisé en ce que** la première pression pₐ à l'étape de procédé a) se situe dans la plage allant de 1 à 25 bar.

12. Procédé selon l'une quelconque des revendications 10 ou 11, **caractérisé en ce que** la deuxième pression p_{b} à l'étape de procédé b) se situe dans la plage allant de 0,5 à 1,5 bar.

13. Procédé selon l'une quelconque des revendications 10 à 12, **caractérisé en ce que** l'étape suivante suit l'étape b) :
c) le maintien de la deuxième pression p_{b} et de la température de réaction T_{R} de l'étape de procédé b) pendant une durée dans la plage allant de 20 minutes à 20 heures.

14. Procédé selon l'une quelconque des revendications 1 à 13, **caractérisé en ce que** le mélange réactionnel contient en tant que composant (E) 0,1 à 0,9 % en poids d'au moins un régulateur de groupes terminaux, par rapport au poids total des composants (A) à (E).
